# EUROPÄISCHE PATENTSCHRIFT

(11) **EP 1 432 513 B1**
(45) Veröffentlichungstag und Bekanntmachung des Hinweises auf die Patenterteilung: **25.07.2007**
(21) Anmeldenummer: 02779324.9
(22) Anmeldetag: 09.09.2002
(51) Int. Cl.: B01J 39/20, B01J 41/14, B01J 20/32

(54) **ALKALISTABILE HYDROPHILE SORBENTIEN FÜR DIE IONENAUSTAUSCHCHROMATOGRAPHIE**
ALKALI-STABLE HYDROPHILIC SORBENTS FOR ION-EXCHANGE CHROMATOGRAPHY
SORBANTS HYDROPHILES ALCALINEMENT STABLES POUR LA CHROMATOGRAPHIE PAR ECHANGE D'IONS

(30) Priorität: 05.10.2001 DE 10149256
(43) Veröffentlichungstag der Anmeldung: 30.06.2004
(60) Teilanmeldung: 07011235.4
(73) Patentinhaber: Merck Patent GmbH, 64293 Darmstadt (DE)
(72) Erfinder: BRITSCH, Lothar, 79276 Reute (DE); DERWENSKUS, Karl-Heinz, 64237 Darmstadt (DE)
(86) Internationale Anmeldenummer: PCT/EP2002/010072
(87) Internationale Veröffentlichungsnummer: WO 2003/031062

(56) Entgegenhaltungen:
- EP-A- 0 337 144
- EP-A- 0 482 339
- WO-A-96/14151
- DE-A- 4 316 136

## Beschreibung

Die Erfindung betrifft Sorbentien für die Ionenaustauschchromatographie, die insbesondere geeignet sind für chromatographische Trennungen von biologischen Substanzen (z.B. Proteinen, Peptiden oder Nukleinsäuren, sowie Viren).

Bei der chromatographischen Trennung von biologischen Substanzen, insbesondere bei präparativen Prozessen, müssen die Sorbentien mehrere Eigenschaften aufweisen; dazu gehören zunächst eine gute Beständigkeit gegen alkalische Lösungen, wie sie zur Reinigung von Trenneinrichtungen (cleaning in place: CIP) üblich sind, sowie eine ausreichende mechanische Stabilität, damit hohe Flußraten erreichbar sind, und auch eine ausreichende Hydrophilie, damit irreversible Bindung der aufzureinigenden Substanzen an das Sorbens vermieden wird. Weiterhin ist auch eine hohe Bindungskapazität notwendig, damit die Trennprozesse wirtschaftlich geführt werden können. Die Bindungskapazität sollte auch bei hoher Flußrate im wesentlichen erhalten sein, d.h. nicht nur die statische, sondern auch die dynamische Bindungskapazität sollte hoch sein. Soweit die Sorbentien aus derivatisierten, z.B. gepfropften Materialien bestehen, dürfen wesentliche Eigenschaften des Basismaterials nicht durch die Derivatisierung verschlechtert werden.

In EP 0 337 144 werden Sorbentien für die Ionenaustauschchromatographie offenbart. Nach der Lehre von EP 0 337 144 werden derivatisierte Acrylamidmonomere auf diolsubstituierte Basismaterialien wie (meth)-acrylatvernetzte Polymere oder Kieselgelderivate aufgepfropft. Die derartig erhältlichen Ionenaustauscher zeigen zwar gute Trenneigenschaften, sowie eine gute Druckstabilität, weisen aber nur eine beschränkte Stabilität gegen alkalische Lösungen auf.

Es ergibt sich also die Aufgabe, für die lonenaustauschchromatographie Sorbentien mit verbesserten Eigenschaften, insbesondere verbesserte Alkalistabilität, sowie guter dynamischer Bindungskapazität bereitzustellen.

Gegenstand der Erfindung sind alkalistabile, hydrophile Sorbentien für die lonenaustauschchromatographie erhältlich durch folgende Verfahrensschritte:
a) Bereitstellen eines Basismaterials, wobei es sich bei besagtem Basismaterial um ein vernetztes Vinylpolymer aus diolgruppenhaltigen Vinylmonomeren und vernetzenden Monomeren, deren polymerisierbare Gruppen durch Carbonamidgruppen enthaltene Ketten verbunden sind, handelt, und wobei dieses Basismaterial mehr als 1 mMol Diolgruppen pro Gramm enthält;
b) Hinzufügen des Basismaterials zu einer wäßrigen Lösung des zu pfropfenden Monomers oder der zu pfropfenden Monomeren, wobei ein Monomer eine ionische Gruppe oder eine Vorläufergruppe für eine ionische Gruppe enthält;
c) Pfropfung der Monomeren auf das Basismaterial, wobei die Pfropfungspolymerisation mit Cer-(IV)-Ionen gestartet wird, und wobei die Verfahrensparameter Suspensionsdichte (Konzentration des Basismaterials), Monomerkonzentration, Starterkonzentration, pH-Wert, Zeit, Temperatur und Zusatz von Polymerisationsinhibitoren so gewählt werden, daß ein Pfropfgrad von 0,5 bis 2 mMol pro Gramm Träger (Trockenmasse) erreicht wird;
d) und schließlich gegebenenfalls die in Schritt b) eingeführten Vorläufergruppen für ionische Gruppen in ionische Gruppen überführt werden.

Gegenstand der Erfindung sind Verfahren zur Herstellung von alkalistabilen, hydrophilen Sorbentien für die Ionenaustauschchromatographie mit den oben genannten Verfahrensschritten, sowie die Verwendung der solchermaßen erhältlichen Sorbentien zur Trennung mindestens zweier Substanzen.

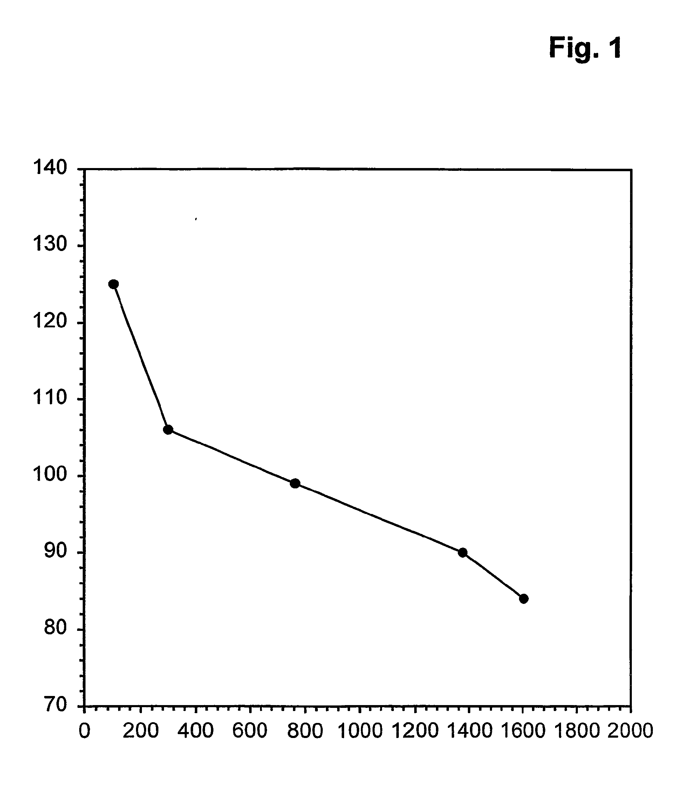

Figur 1 zeigt die Proteinbindungskapazität eines DEAE-Ionenaustauschers, hergestellt nach Beispiel A1 in Abhängigkeit von der linearen Flußrate; experimentelle Einzelheiten finden sich in Anwendungsbeispiel B1. Dabei werden selbst bei einer linearen Flußrate von 1500 cm/h noch ca. 70 % der maximalen Bindungskapazität gemessen. Die erfindungsgemäßen Sorbentien sind somit hervorragend zur Anreicherung von Zielsubstanz ("capturing") geeignet.

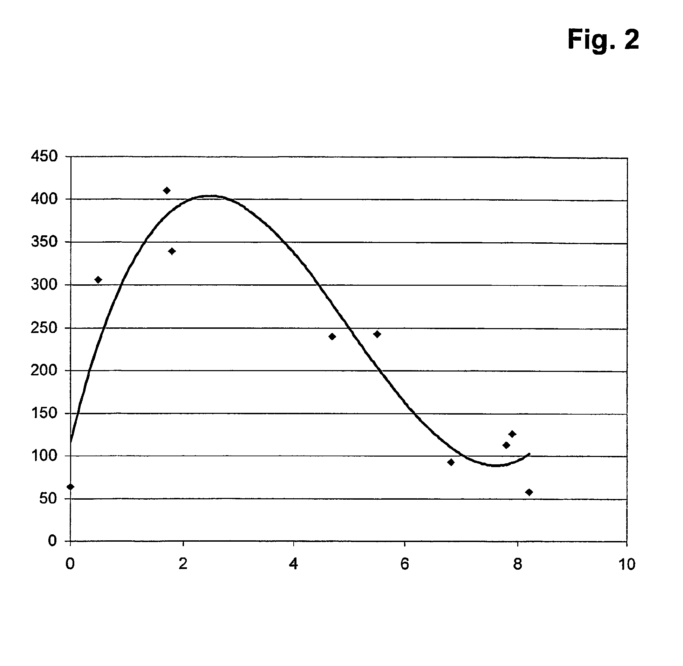

Figur 2 zeigt die Proteinbindungskapazität eines SO₃-Ionenaustauschers, hergestellt nach Beispiel A2 in Abhängigkeit von dem Pfropfgrad; experimentelle Einzelheiten finden sich in Anwendungsbeispiel B2. Die Bindungskapazität durchläuft in Abhängigkeit vom Pfropfgrad eine Kurve mit einem deutlichen Maximum bei ca. 0,6 mM pro Gramm Trockenmasse (entsprechend 2 % Schwefel). Dabei wird eine Bindungskapazität von ca. 400 mg Lysozym pro g Gel erreicht.

Es wurde gefunden, daß Ionenaustauscher mit erheblich verbesserten Eigenschaften erhältlich sind, wenn Basismaterialien mit einem Gehalt an Diolgruppen von mehr als 1 mMol pro Gramm Basismaterial (Trockenmasse) verwendet werden und die Reaktionsführung bei der Pfropfpolymerisation so gestaltet wird, daß ein Pfropfgrad von 0,5 bis 2 mMol pro Gramm Basismaterial (Trockenmasse) erreicht wird. Als geeignetes Basismaterial kommen hydrophile, makroporöse, hochvernetzte Polymermaterialien in Frage, dabei handelt es sich insbesondere um vernetzte Vinylpolymere aus diolgruppenhaltigen Vinylmonomeren und vernetzenden Monomeren, deren polymerisierbare Gruppen durch Carbonamidgruppen enthaltene Ketten verbunden sind. Diese enthalten mehr als 1 mMol Diolgruppen pro Gramm Basismaterial, insbesondere von 2 bis 6 mMol Diolgruppen/g. Vorzugsweise werden poröse Perlcopolymerisate aus N,N-Methylen-bis-acrylamid und 3-Allyloxy-1,2-propandiol (1:0.6) (Hersteller Degussa/Röhm, Darmstadt) verwendet. Verwendbar als Basismaterial sind auch Polymere mit amidischer oder etherischer Vernetzung und etherisch oder amidisch gebundenen aliphatischen Hydroxylgruppen an der Oberfläche oder solchen Gruppen, die in letztere chemisch umgewandelt werden können. Wichtig ist die Anwesenheit der Hydroxylgruppen, bevorzugt in Form von aliphatischen Diolgruppen in ausreichender Konzentration an der Oberfläche des Basismaterials. Im Idealfall sollen sämtliche funktionellen Reste der monofunktionellen Monomerkomponente des polymeren Basismaterials durch aliphatische Diolgruppen repräsentiert sein. Es kommen jedoch auch Anteile von wenigstens 50% dieser Gruppen in Form von Diolgruppen in Frage. Methoden zur Bestimmung von Diolgruppen sind dem Fachmann bekannt. Besonders geeignete Basismaterialien sind in EP 0 482 339 offenbart.

Die erfindungsgemäß verwendeten Basismaterialien liegen insbesondere als (makro)-poröse Perlpolymerisate vor; es können jedoch auch unporöse Perlpolymerisate oder Polymerisate in anderer Form, z.B. poröse Zylinder oder oder anders gestaltete Formkörper, oder auch Membranen, Fäden oder Gewebe eingesetzt werden.

Auf diese Basismaterialien werden Monomere aufgepfropft, wobei wie im folgenden näher erläutert, die Pfropfpolymerisation so gesteuert wird, daß Pfropfungsgrade von 0,5 bis 2 mMol pro Gramm Basismaterial erhalten werden. Wird die Obergrenze des Pfropfgrades wesentlich überschritten, so weist das resultierende Sorbens häufig verschlechterte mechanische Eigenschaften auf. Erfindungsgemäß werden Ionenaustauscher erhalten, die verbesserte Eigenschaften, insbesondere eine verbesserte dynamische Bindungskapazität, sowie eine sehr gute Alkalistabilität aufweisen..

Erfindungsgemäß wird die Pfropfung mit Cer(IV)-lonen gestartet (G.Mino und S.Kaizerman (1958) J.Polymer Science 31, 242-243; G.Mino et al. (1959) J.Polymer Science 38, 393-401). Weitere Einzelheiten sind in EP 0 337 144 offenbart. Durch die Reaktion mit Cer-(IV)-Salzen in stark saurer wäßriger Lösung werden an dem Basismaterial Radikale erzeugt, wobei Diolgruppen offenbar schneller als aliphatische Hydroxylgruppen reagieren. An den bei dieser Reaktion entstehenden Radikalen setzt eine Radikalkettenreaktion ein, wobei die zugesetzten Monomeren in die Kette eingebaut werden. Diese Kette ist somit linear und mit einer Monomereinheit mit dem aliphatischen Rest des Basismaterials verknüpft. Die Polymerisation wird durch Abbruchsreaktionen unter Beteilung der Cer-Salze beendet. Deswegen ist die (mittlere) Kettenlänge durch die Konzentrationsverhältnisse des Basismaterials, des Initiators und der Monomeren beeinflußbar. Diesbezügliche Einzelheiten sind im folgenden beschrieben. Weiterhin können einheitliche Monomere oder auch Gemische verschiedener Monomere eingesetzt werden; im letzteren Fall entstehen gepfropfte Copolymerisate.

Die Umsetzung mit Cer(IV)-salzen ist auch möglich, wenn als Lösungsmittel Mischungen benutzt werden, die neben Wasser organische Lösungsmittel enthalten, wobei diese Lösungsmittel mit Wasser mischbar sind und keine Hydroxylgruppen enthalten. Besonders bevorzugt sind dabei Dioxan oder Tetrahydrofuran. Der Anteil des organischen Lösungsmittels im Reaktionsansatz beträgt typischerweise 5-80 Volumen-%, insbesondere 20-50 Volumen-%. Diese Verfahrensvariante ermöglicht die Pfropfung mit Monomeren, die nur geringfügig in Wasser löslich sind.

Um den erfindungsmäßig bevorzugten Pfropfgrad von von 0,5 bis 2 mMol pro Gramm Basismaterial zu erreichen, werden die Verfahrensparameter Konzentration des Basismaterials (Suspensionsdichte), Monomerkonzentration, Starterkonzentration, pH-Wert, Zeit, Temperatur und Zusatz von Polymerisationsinhibitoren variiert. Bei gegebener Suspensionsdichte des zu bepfropfenden Basismaterials und somit definierter reaktiver Oberfläche sowie zugänglicher Anzahl der durch das Cer-(IV)-Salz oxidierbaren funktionellen Gruppen kann der Pfropfgrad hauptsächlich durch die Variation folgender Parameter im Sinne des erfindungsgemäßen Pfropfprodukts eingestellt werden:
a) Monomerkonzentration (0.05 - 2 Mol/L, vorzugsweise 0.2 - 0.8 Mol/L): Erhöhung führt zu gesteigerter Bildung von Pfropfpolymer.
b) pH Wert (0-6, vorzugsweise 1-2): Erhöhung des pH Werts führt zu verminderter Bildung von Pfropfpolymer.
c) Starterkonzentration (10⁻⁶ bis 10⁻¹ Mol/L; vorzugsweise 10⁻³- 10⁻² Mol/L): Erhöhung der Starterkonzentration führt zu einer größeren Zahl von Startpunkten und damit gebildeter Ketten von Pfropfpolymer. Jedoch ergibt sich bei zu hoher Starterkonzentration auch ein vorzeitiger Kettenabbruch durch Beteiligung des Metallkomplexes an der Terminationsreaktion. Im Ergebnis ist dann die Pfropfdichte erhöht, jedoch auf Kosten des erzielten mittleren Polymerisationsgrades, so dass der Pfropfgrad auch wieder verringert sein kann.
d) Zeit: Verlängerung der Reaktionsdauer bewirkt gesteigerte Bildung an Pfropfpolymer; die maximale Menge wird in typischerweise asymptotischer Annäherung nach etwa 20 h erreicht. Die optimale Reaktionszeit liegt zwischen 0.5 und 5 h.
e) Temperatur: spielt nur eine untergeordnete Rolle im Hinblick auf die Stabilität des Metallkomplexes in der Mischung sowie bezüglich der Diffusion der löslichen Reaktionsteilnehmer in dem Porensystem des Trägermaterials. Bevorzugte Temperaturen sind zwischen 10 und 60°C. Maxima und Minima sind durch Schmelz- bzw. Siedepunkt der wässrigen Suspension gegeben.
f) Inhibitoren: Die dem Fachmann geläufigen Inhibitoren radikalischer Polymerisationsreaktionen können grundsätzlich als Moderatoren oder zum vorzeitigen Reaktionsabbruch verwendet werden, um ganz bestimmte Pfropfgrade zu erzielen.

Zu den Inhibitoren zählen u.a. redoxaktive Substanzen wie Chinone/Hydrochinone, Natriumsulfit, alle leicht oxidierbaren Metallsalze und Metallkomplexe; Aldehyde und dergleichen leicht oxidierbare organische Substanzen. Weniger gut geeignet sind Verbindungen mit Monohydroxy- oder vicinalen Dihydroxyfunktionen oder Polyhydroxyverbindungen und verwandte Stoffe, deren primäre Oxidationsprodukte mit den anwesenden Monomeren zur Bildung von Homopolymeren Anlass geben, welche teilweise schwierig aus dem pfropfpolymerisierten Trägermaterial zu entfernen sind. Auch ist Luftsauerstoff geeignet, die Polymerisationsreaktion zu verlangsamen.

Für die erfindungsgemäßen Pfropfpolymeren sind insbesondere folgende Monomeren bevorzugt: N-(2-Diethylaminoethyl)-acrylamid, N-(2-Dimethylaminoethyl)-acrylamid, N-(2-Trimethylammoniumethyl)-acrylamid Hydrochlorid, N-(3-Trimethylammoniumpropyl)-acrylamid Hydrochlorid, 2-Acrylamido-2-methyl-1-propansulfonsäure, Acrylsäure, Acrylnitril, sowie auch 2-Acrylamido-ethansulfonsäure, Acrylamid und Acrylsäuredimethylamid.

Grundsätzlich sind für die erfindungsgemäßen Pfropfpolymeren neben Acrylsäure und Acrylamid allgemein N-substituierte Acrylamide geeignet, soweit der Amidstickstoff keine Substituenten trägt, die durch Cer(IV) oxidierbare funktionelle Gruppen (z.B. Hydroxyl- oder Carboxygruppen) enthalten. Weiterhin sollten diese Monomeren ionische Gruppen oder Gruppen, die sich in ionische Gruppen überführen lassen, enthalten.

Pfropfpolymerisate, die beispielsweise Acrylnitril oder Acrylamid enthalten, lassen sich durch polymeranaloge Hydrolyse in Ionenaustauscher mit Carboxygruppen umwandeln.

Es kann aber auch sinnvoll sein, zur Regulierung der Ladungsdichte Comonomere zuzufügen, die keine ionischen Gruppen enthalten. Dazu sind beispielsweise neben Acrylamid N-(2-Methoxyethyl)-acrylamid oder N-(2-Ethoxyethyl)-acrylamid geeignet.

Die entsprechenden Methacrylsäurederivate sind ebenfalls geeignet.

Es hat sich gezeigt, daß Amidbindungen, insbesondere N-Alkyl-amidbindungen gegen Alkali sehr stabil sind.

Die erfindungsgemäßen Sorbentien weisen gegenüber den Sorbentien, wie sie in EP 0 337 144 offenbart werden, wesentlich erhöhte dynamische Bindungskapazitäten auf. Dies wurde möglich, da der Zusammenhang zwischen Bindungskapazität und Pfropfgrad, der zu einem ausgeprägten Optimum führt, im Stand der Technik nicht erkannt wurde. Ferner weisen die erfindungsgemäßen Sorbentien eine wesentlich verbesserte Alkalistabilität auf.

Die erfindungsgemäßen Sorbentien lassen sich vorteilhaft anstelle bisher bekannter Sorbentien verwenden, z.B. anstelle von Sorbentien, wie sie in EP 337 144 offenbart sind. So können die erfindungsgemäßen Sorbentien für die Trennung von Biopolymeren, wie Peptiden, Proteinen oder Nukleinsäuren, aber auch für die Trennung und Reinigung von Viren, Zellorganellen, prokaryontischen oder eukaryontischen Zellen, sowie Proteinkomplexen verwendet werden.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

Soweit nicht anders angegeben, beziehen sich Gewichtsangaben für Basismaterialien auf das Trockengewicht, zu dessen Bestimmung das Material fünfmal mit einem Überschuß von Aceton gewaschen und anschließend im Vakuum bei 50 °C bis zur Gewichtskonstanz getrocknet wird.

Raumtemperatur (R.T.) bedeutet 15 bis 30 °C.

### A Herstellungsbeispiele

**Herstellbeispiel A1:** Herstellung eines DEAE-Ionenaustauschermaterials
a) Monomerlösung:
   Die Monomerlösung wird durch Acrylierung von 127 g (1.09 Mol) N,N-Diethylendiamin, gelöst in 1.2 Liter Wasser, bei 0-5°C, erhalten. Hierzu werden 95 g (1.05 Mol) Acrylsäurechlorid zu der Aminlösung so unter Rühren zugegeben, dass der angegebene Temperaturbereich während der Umsetzung eingehalten wird. Man lässt nach beendeter Zugabe des Acrylsäurechlorids noch 30 Minuten nachreagieren und stellt die Lösung danach mit 65%iger Salpetersäure auf pH 2.0 ein.
b) Pfropfung:
   In einem temperierbaren Rührreaktor wird eine Mischung aus 1 kg (Feuchtmasse) des Basismaterials (hydrophiles, makroporöses, hochvernetztes Polymermaterial, Copolymerisat aus N,N-Methylen-bis-acrylamid und 3-Allyloxy-1,2-propandiol (1:0,6); Hersteller: Degussa/Röhm, Darmstadt, Deutschland) zur frisch hergestellten Monomerlösung gegeben.

Die Mischung aus Basismaterial und Monomerlösung wird zur Suspension aufgerührt, mit Wasser so ergänzt, dass ein Gesamtvolumen von 3 Liter erhalten wird. Anschließend wird die Suspension auf 42°C aufgeheizt und nach Inertisieren mit Stickstoff unter weiterem Rühren mit einer Lösung aus 16.44 g Ammoniumcer(IV)nitrat (30 mMol) in 60 ml 0.5 M Salpetersäure versetzt.

Nach 12-18 h bei 42°C wird die Suspension abfiltriert oder abgeschleudert und das zurückbleibende Gel mehrmals und sukzessive mit Wasser, einer Mischung aus 0.2 M Ascorbinsäure/ 0.5 M Schwefelsäure, dann wieder mit Wasser sowie mit 1 M NaOH und nochmals Wasser gewaschen, bis sämtliche lösliche Bestandteile der Reaktionsmischung bis zu den Grenzen der Nachweisempfindlichkeit gängiger analytischer Methoden aus dem Gel entfernt sind.

Das fertige Produkt wird in Suspension mit 20% Ethanol enthaltender Salzlösung oder z.B. in 0.1 M NaOH bei R.T. gelagert.

### Analysen:

Die Bindungskapazität für BSA beträgt etwa 500 mg/g (bezogen auf Trockenmasse des Gels).

Der Pfropfgrad beträgt etwa 1 mmol/g (in Monomereinheiten bezogen auf Trockenmasse), gemessen durch Säure/Base Titration der immobilisierten DEAE-Gruppen.

### Herstellbeispiel A2: Herstellung eines SO₃-Ionenaustauschermaterials

Der Kationenaustauscher mit SO₃-Gruppen wird in Analogie zu der Beschreibung von Herstellbeispiel A1 hergestellt, indem man anstelle des dort genannten Monomers 2-Acrylamido-2-methyl-1-propansulfonsäure als Monomer einsetzt.

Die Herstellung wird mit verschiedenen Varianten wiederholt, wobei verschiedene Präparationen Austauscher mit unterschiedlichen Pfropfgraden erhalten werden. Der jeweilige Pfropfgrad wird durch Elementaranalyse des Schwefelgehaltes bestimmt.

### Herstellbeispiel A3: Herstellung eines stark basischen Ionenaustauschermaterials (TMAE)

Der Anionenaustauscher mit TMAE-Gruppen wird in Analogie zu der Beschreibung von Herstellbeispiel A1 hergestellt, indem man anstelle des dort genannten Monomers N-(2-Trimethylammoniumethyl)-acrylamid Hydrochlorid als Monomer einsetzt.

### B Anwendungsbeispiele

### Anwendungsbeispiel B1: Ermittlung der Bindungskapazität mit Rinderserumalbumin (Durchbruchkurve)

lonenaustauschermaterial, hergestellt nach Beispiel A1, wird in eine SuperFormance® Glassäule (150 x 16 mm; 125 mm Höhe des Sorbensbettes) gefüllt und mit dem Auftragepuffer (50 mM TRIS-Puffer, pH 8,3) äquilibriert. Eine Lösung von Rinderserumalbumin (5 mg/ml) in diesem Puffer wird kontinuierlich aufgetragen (linearer Fluß: 100 cm/h) und das Elutionsdiagramm durch Photometrie bei 280 nm gemessen. Aus der Durchbruchskurve (10 %) wird die Kapazität (125 mg/ ml Gel) bestimmt.

Der Versuch wird mit höheren Flußraten wiederholt. Die Ergebnisse sind in Figur 1 zusammengefaßt. Selbst bei einer linearen Flußrate von 1500 cm/h werden noch ca. 70 % der maximalen Bindungskapazität gemessen.

### Anwendungsbeispiel B2: Ermittlung der Bindungskapazität mit Lysozym (Durchbruchkurve)

lonenaustauschermaterial, hergestellt nach Beispiel A2, wird in eine SuperFormance® Glassäule (150 x 16 mm; 100 mm Höhe des Sorbensbettes) gefüllt und mit dem Auftragepuffer (20 mM Phosphat-Puffer, pH 7,0) äquilibriert. Eine Lösung von Lysozym (5 mg/ml) in diesem Puffer wird kontinuierlich aufgetragen (linearer Fluß: 100 cm/h) und das Elutionsdiagramm durch Photometrie bei 280 nm gemessen. Aus der Durchbruchskurve (10 %) wird die Kapazität (110 mg Lysozym/ ml Gel) bestimmt.

Der Versuch wird mit den verschiedenen Präparationen (unterschiedlicher Pfropfgrad) wiederholt. Die Ergebnisse sind in Figur 2 zusammengefaßt. Die Bindungskapazität durchläuft in Abhängigkeit vom Pfropfgrad eine Kurve mit einem deutlichen Maximum bei ca. 0,6 mM pro Gramm Trockenmasse (entsprechend 2 % Schwefel).

### Anwendungsbeispiel B3: Haltbarkeit der Sorbentien in alkalischer Lösung

DEAE-Ionenaustauscher hergestellt nach Beispiel A1 wird in wäßriger NaOH-Lösung (1 bzw. 5 Mol/L) bei Raumtemperatur gelagert. Nach einem Jahr war die Bindungskapazität um 5 % (in 1 Mol/L NaOH), beziehungsweise 10 % (in 5 Mol/L NaOH) verringert.

## Patentansprüche

1. Alkalistabiles, hydrophiles Sorbens für die Ionenaustauschchromatographie erhältlich durch folgende Verfahrensschritte:
a) Bereitstellen eines Basismaterials, wobei es sich bei besagtem Basismaterial um ein vernetztes Vinylpolymer aus diolgruppenhaltigen Vinylmonomeren und vernetzenden Monomeren, deren polymerisierbare Gruppen durch Carbonamidgruppen enthaltene Ketten verbunden sind, handelt, und wobei dieses Basismaterial mehr als 1 mMol Diolgruppen pro Gramm enthält;
b) Hinzufügen des Basismaterials zu einer wäßrigen Lösung des zu pfropfenden Monomers, wobei das Monomer eine ionische Gruppe oder eine Vorläufergruppe für eine ionische Gruppe enthält;
c) Pfropfung der Monomeren auf das Basismaterial, wobei die Pfropfungspolymerisation mit Cer-(IV)-Ionen gestartet wird, und wobei die Verfahrensparameter Suspensionsdichte (Konzentration des Basismaterials), Monomerkonzentration, Starterkonzentration, pH-Wert, Zeit, Temperatur und Zusatz von Polymerisationsinhibitoren so gewählt werden, daß ein Pfropfgrad von 0,5 bis 2 mMol pro Gramm Träger (Trockenmasse) erreicht wird;
d) und schließlich gegebenenfalls die in Schritt b) eingeführten Vorläufergruppen für ionische Gruppen in ionische Gruppen überführt werden.

2. Alkalistabiles, hydrophiles Sorbens für die lonenaustauschchromatographie nach Anspruch 1, wobei in Schritt b) außer dem Monomer, das eine ionische Gruppe oder eine Vorläufergruppe für eine ionische Gruppe enthält, ein zusätzliches neutrales Monomer zugesetzt wird.

3. Verwendung eines alkalistabilen, hydrophilen Sorbens für die lonenaustauschchromatographie nach Anspruch 1 oder 2 zur chromatographischen Trennung mindestens zweier Substanzen.

4. Verfahren zur Herstellung eines alkalistabilen, hydrophilen Sorbens für die Ionenaustauschchromatographie mit folgenden Verfahrensschritten:
a) Bereitstellen eines Basismaterials, wobei es sich bei besagtem Basismaterial um ein vernetztes Vinylpolymer aus diolgruppenhaltigen Vinylmonomeren und vernetzenden Monomeren, deren polymerisierbare Gruppen durch Carbonamidgruppen enthaltene Ketten verbunden sind; handelt, und wobei dieses Basismaterial mehr als 1 mMol Diolgruppen pro Gramm enthält;
b) Hinzufügen des Basismaterials zu einer wäßrigen Lösung des zu pfropfenden Monomers, wobei das Monomer eine ionische Gruppe oder eine Vorläufergruppe für eine ionische Gruppe enthält;
c) Pfropfung der Monomeren auf das Basismaterial, wobei die Pfropfungspolymerisation mit Cer-(IV)-Ionen gestartet wird, und wobei die Verfahrensparameter Monomerkonzentration bei gegebener Suspensionsdichte, Starterkonzentration bei gegebener Monomerkonzentration und Suspensionsdichte, pH-Wert, Zeit, Temperatur und Zusatz von Polymerisationsinhibitoren so gewählt werden, daß Pfropfgrad von 0,5 bis 2 mMol pro Gramm Träger (Trockenmasse) erreicht wird;
d) und schließlich gegebenenfalls die in Schritt b) eingeführten Vorläufergruppen für ionische Gruppen in ionische Gruppen überführt werden.

5. Verfahren zur Herstellung eines alkalistabilen, hydrophilen Sorbens für die lonenaustauschchromatographie nach Anspruch 4, wobei in Schritt b) außer dem Monomer, das eine ionische Gruppe oder eine Vorläufergruppe für eine ionische Gruppe enthält, ein zusätzliches neutrales Monomer zugesetzt wird.

## Claims

1. Alkali-stable, hydrophilic sorbent for ion-exchange chromatography obtainable by the following process steps:
a) provision of a base material, where the said base material is a crosslinked vinyl polymer comprising diol group-containing vinyl monomers and crosslinking monomers whose polymerisable groups are linked by carboxamide group-containing chains, and where this base material contains more than 1 mmol of diol groups per gram;
b) addition of the base material to an aqueous solution of the monomer to be grafted, where the monomer contains an ionic group or a precursor group for an ionic group;
c) grafting of the monomers to the base material, where the graft polymerisation is initiated by means of cerium(IV) ions, and where the process parameters of suspension density (concentration of the base material), monomer concentration, initiator concentration, pH, time, temperature and addition of polymerisation inhibitors are selected in such a way that a degree of grafting of 0.5 to 2 mmol per gram of support (dry weight) is achieved;
d) and finally, where appropriate, the precursor groups for ionic groups introduced in step b) are converted into ionic groups.

2. Alkali-stable, hydrophilic sorbent for ion-exchange chromatography according to Claim 1, where, in addition to the monomer which contains an ionic group or a precursor group for an ionic group, an additional neutral monomer is added in step b).

3. Use of an alkali-stable, hydrophilic sorbent for ion-exchange chromatography according to Claim 1 or 2 for the chromatographic separation of at least two substances.

4. Process for the preparation of an alkali-stable, hydrophilic sorbent for ion-exchange chromatography having the following process steps:
a) provision of a base material, where the said base material is a crosslinked vinyl polymer comprising diol group-containing vinyl monomers and crosslinking monomers whose polymerisable groups are linked by carboxamide group-containing chains, and where this base material contains more than 1 mmol of diol groups per gram;
b) addition of the base material to an aqueous solution of the monomer to be grafted, where the monomer contains an ionic group or a precursor group for an ionic group;
c) grafting of the monomers to the base material, where the graft polymerisation is initiated by means of cerium(IV) ions, and where the process parameters of monomer concentration at a given suspension density, initiator concentration at a given monomer concentration and suspension density, pH, time, temperature and addition of polymerisation inhibitors are selected in such a way that a degree of grafting of 0.5 to 2 mmol per gram of support (dry weight) is achieved;
d) and finally, where appropriate, the precursor groups for ionic groups introduced in step b) are converted into ionic groups.

5. Process for the preparation of an alkali-stable, hydrophilic sorbent for ion-exchange chromatography according to Claim 4, where, in addition to the monomer which contains an ionic group or a precursor group for an ionic group, an additional neutral monomer is added in step b).

## Revendications

1. Sorbant hydrophile et stable à l'alcali destiné à la chromatographie d'échange d'ions, pouvant être obtenu par les étapes de procédé suivantes :
a) la fourniture d'un matériau de base, où ledit matériau de base est un polymère de vinyle réticulé comprenant des monomères de vinyle contenant des groupements diol et des monomères de réticulation dont les groupements polymérisables sont liés par des chaînes contenant des groupements carboxamide, et où ce matériau de base contient plus de 1 mmol de groupements diol par gramme ;
b) l'addition du matériau de base à une solution aqueuse du monomère à greffer, où le monomère contient un groupement ionique ou un groupement précurseur d'un groupement ionique;
c) le greffage des monomères au matériau de base, où la polymérisation de greffage est initiée au moyen d'ions cérium(IV), et où les paramètres de procédé de densité de suspension (concentration en matériau de base), de concentration en monomères, de concentration en amorceur, de pH, de temps, de température et d'addition d'inhibiteurs de polymérisation sont choisis de telle sorte qu'on obtient un degré de greffage allant de 0,5 à 2 mmol par gramme de support (poids sec) ;
d) et finalement, le cas échéant, les groupements précurseurs des groupements ioniques introduits dans l'étape b) sont convertis en groupements ioniques.

2. Sorbant hydrophile et stable à l'alcali destiné à la chromatographie d'échange d'ions selon la revendication 1, où, outre le monomère qui contient un groupement ionique ou un groupement précurseur d'un groupement ionique, on ajoute un monomère neutre supplémentaire dans l'étape b).

3. Utilisation d'un sorbant hydrophile et stable à l'alcali destiné à la chromatographie d'échange d'ions selon la revendication 1 ou 2 pour la séparation chromatographique d'au moins deux substances.

4. Procédé de préparation d'un sorbant hydrophile et stable à l'alcali destiné à la chromatographie d'échange d'ions, ayant les étapes de procédé suivantes :
a) la fourniture d'un matériau de base, où ledit matériau de base est un polymère de vinyle réticulé comprenant des monomères de vinyle contenant des groupements diol et des monomères de réticulation dont les groupements polymérisables sont liés par des chaînes contenant des groupements carboxamide, et où ce matériau de base contient plus de 1 mmol de groupements diol par gramme ;
b) l'addition du matériau de base à une solution aqueuse du monomère à greffer, où le monomère contient un groupement ionique ou un groupement précurseur d'un groupement ionique ;
c) le greffage des monomères au matériau de base, où la polymérisation de greffage est initiée au moyen d'ions cérium(IV), et où les paramètres de procédé de concentration en monomères à une densité de suspension donnée, de concentration en amorceur à une concentration en monomères et une densité de suspension données, de pH, de temps, de température et d'addition d'inhibiteurs de polymérisation sont choisis de telle sorte qu'on obtient un degré de greffage allant de 0,5 à 2 mmol par gramme de support (poids sec) ;
d) et finalement, le cas échéant, les groupements précurseurs des groupements ioniques introduits dans l'étape b) sont convertis en groupements ioniques.

5. Procédé de préparation d'un sorbant hydrophile et stable à l'alcali destiné à la chromatographie d'échange d'ions selon la revendication 4, où, outre le monomère qui contient un groupement ionique ou un groupement précurseur d'un groupement ionique, on ajoute un monomère neutre supplémentaire dans l'étape b).
